# DEMANDE DE BREVET EUROPEEN

(11) **EP 1 160 695 A2**
(43) Date de publication de la demande: **05.12.2001**
(21) Numéro de dépôt: 01401267.8
(22) Date de dépôt: 16.05.2001
(51) Int. Cl.: G06F 17/30

(54) **Appareil de communication d'un réseau informatique, pourvu d'un navigateur et d'un écran rudimentaire**

(30) Priorité: 16.05.2000 GB 0011810
(71) Demandeur: SAGEM SA, 75116 Paris (FR)
(72) Inventeur: Duong, Dan, 75005 Paris (GB)
(74) Mandataire: Bloch, Gérard

(57) **Abrégé**

L'appareil comprend un écran d'affichage (2), des moyens de saisie (1), un navigateur informatique (3), destiné à commander l'affichage d'informations sur l'écran (2), et des moyens de modification (5, 41-45, 6) agencés pour modifier les informations dont l'affichage est commandé par le navigateur (3).

## Description

Avec le développement actuel des réseaux informatiques, et notamment de l'Internet, de nombreux appareils de communication, tels que des téléphones mobiles, comprennent aujourd'hui un navigateur informatique permettant de récupérer et d'afficher des pages de sites du réseau informatique.

Un téléphone mobile, pour reprendre cet exemple, comprend un écran d'affichage rudimentaire, ne comportant que quelques lignes d'affichage. Il est donc difficile d'afficher les pages récupérées sur le réseau, généralement riches en informations, sur de tels écrans.

Pour pallier cet inconvénient, le navigateur du téléphone mobile est simplifié et adapté pour réduire la richesse des informations à afficher.

Mais une telle solution ne s'avère pas pleinement satisfaisante.

La présente invention propose d'améliorer encore la qualité de l'affichage des informations de navigation sur un écran de petite taille.

A cet effet, l'invention concerne un appareil de communication d'un réseau informatique, comprenant un navigateur informatique, un écran d'affichage et des moyens de saisie, le navigateur étant destiné à commander l'affichage d'informations sur l'écran, caractérisé par le fait qu'il comprend des moyens de paramétrage permettant de définir au moins un paramètre d'affichage du groupe comportant la fonte des caractères, le mode d'affichage, le centrage des informations sur un élément d'information prédéfini, la justification des informations et le remplacement des majuscules en minuscules, et des moyens de commande de l'affichage, lesdits moyens étant agencés pour modifier les informations dont l'affichage est commandé par le navigateur.

Les constructeurs d'appareils de communication à écran rudimentaire cherchent aujourd'hui à augmenter la taille des écrans des appareils, sans augmenter de façon rédhibitoire l'encombrement de ces appareils.

La présente invention permet au contraire de modifier les informations à afficher, de façon à afficher le maximum d'informations sur l'écran. Grâce à cela, il n'est plus nécessaire de modifier structurellement les appareils.

Dans une forme de réalisation particulière, les moyens de commande de l'affichage sont agencés pour commander le navigateur.

Dans ce cas, et avantageusement, le navigateur est agencé pour, en cas de changement du paramètre d'affichage, commander un nouvel affichage des informations en cours d'affichage.

Les moyens de commande d'affichage peuvent être agencés pour remplacer des majuscules par des minuscules.

Grâce à cela, on réduit l'encombrement des informations à afficher.

Les informations à afficher comprenant une succession d'éléments d'information, les moyens de commande d'affichage peuvent être agencés pour définir les longueurs respectives des espaces entre les éléments d'informations successifs, pour chaque ligne d'affichage de l'écran.

On améliore ainsi la lisibilité des informations affichées et la qualité de l'affichage.

De préférence, il est prévu des moyens de filtrage destinés à reconnaître, parmi les données saisies, une commande de paramétrage.

Les moyens de filtrage permettent de discriminer, parmi les informations saisies, celles correspondant à des commandes de paramétrage et celles correspondant à des informations de navigation. Les informations de navigation sont retransmises vers le navigateur, alors que les commandes de paramétrage sont interceptées par les moyens de reconnaissance et permettent d'activer les moyens de paramétrage et de commander ainsi le changement d'un paramètre d'affichage.

De préférence encore, les moyens de commande d'affichage, les moyens de paramétrage et les moyens de filtrage sont externes au navigateur.

Grâce à cela, on peut utiliser un navigateur standard du commerce et le remplacer facilement par un autre navigateur, par exemple plus évolué.

L'invention sera mieux comprise à l'aide de la description suivante d'une forme de réalisation particulière de l'appareil de l'invention en référence au dessin annexé sur lequel:
- la figure 1 représente un schéma bloc fonctionnel de l'appareil de l'invention, selon la forme de réalisation particulière,
- la figure 2 représente un schéma d'un écran d'affichage de l'appareil de la figure 1 et de sa surface utile d'affichage, en mode d'affichage normal, et
- la figure 3 représente un schéma d'un écran d'affichage et de sa surface utile d'affichage, en mode d'affichage plein écran.

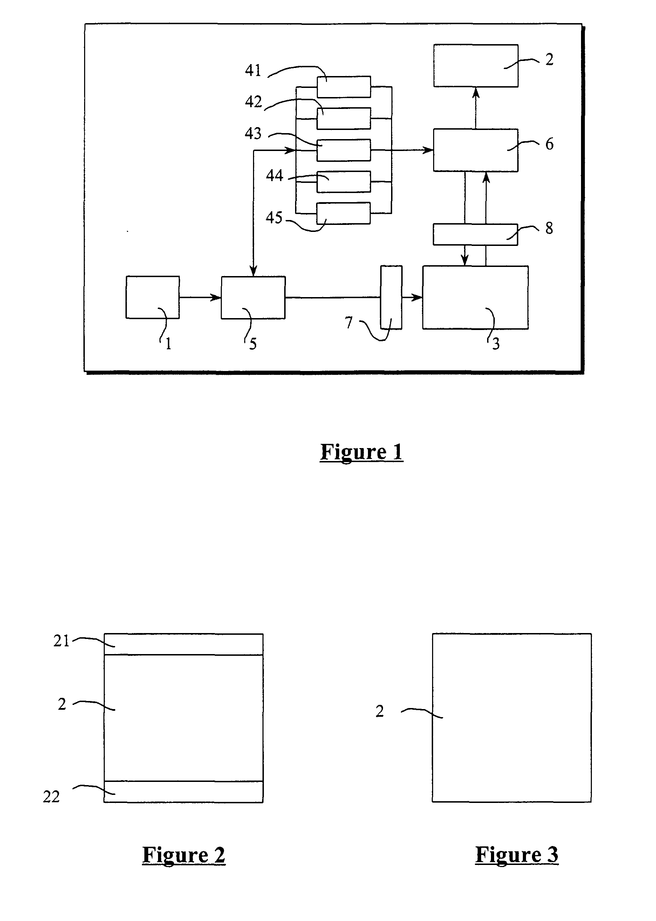

L'appareil représenté sur la figure 1 est un téléphone mobile d'un réseau cellulaire, ici GSM, disposant d'un accès à un réseau informatique, en l'espèce l'Internet, fourni par un fournisseur d'accès.

Par souci de clarté, seuls les éléments nécessaires à la compréhension de l'invention vont maintenant être décrits.

Le téléphone comprend un clavier de saisie 1, un écran d'affichage 2, un module de connexion Internet et un navigateur Internet simplifié 3, ou navigateur "WAP".

L'écran d'affichage 2 comprend un nombre réduit de lignes d'affichage.

Le module de connexion Internet, non représenté, permet au téléphone de se connecter à l'Internet par connexion téléphonique, à travers le réseau GSM, à son fournisseur d'accès.

Le navigateur Internet permet au téléphone, connecté à l'Internet, de récupérer des pages d'informations de sites Internet, hébergés par des serveurs de l'Internet, et d'afficher ces pages sur l'écran 2. Les informations à afficher comprenant une pluralité d'éléments d'information, par exemple un texte contenant des mots et des éléments de ponctuation, le navigateur 3 est agencé pour déterminer la répartition de ces éléments sur les différentes lignes d'affichage de l'écran 2, en fonction de divers paramètres d'affichage, et pour commander leur affichage sur l'écran 2.

Le téléphone comprend en outre divers modules 41-45 de paramétrage de l'affichage, un module de filtrage 5, interposé entre le clavier 1 et le navigateur 3, et un module 6 de commande d'affichage, interposé entre le navigateur 3 et l'écran 2. Ces modules de paramétrage 41-45, de filtrage 5 et de commande d'affichage 6 sont destinés à modifier les informations dont l'affichage est commandé par le navigateur 3, comme cela sera explicité dans la description du fonctionnement du téléphone.

Les modules de paramétrage 41-45 permettent de définir divers paramètres d'affichage des informations dont l'affichage est commandé par le navigateur 3. Ces paramètres d'affichage définissent la manière dont les informations du navigateur 3 sont affichées.

Le module 41 permet de définir la taille des éléments d'information affichés, tels que les caractères de texte (lettres et éléments de ponctuation).

Le module 42 permet de sélectionner soit un mode d'affichage normal, soit un mode d'affichage plein écran. Dans le mode d'affichage normal (figure 2), l'écran 2 comprend une zone supérieure contenant des icônes d'informations et une zone inférieure contenant des boutons de commande, s'étendant chacune sur une ligne de l'écran 2. Dans le mode d'affichage plein écran (figure 3), l'écran 2 ne comprend ni ligne supérieure d'icône, ni ligne inférieure de boutons de commande.

Le module 43 permet au navigateur 2 de centrer les informations affichées sur un élément d'information, prédéfini par un utilisateur, de façon à ce que cet élément, contenu dans les informations affichées à l'écran 2, apparaisse sensiblement au milieu de l'écran 2. Cet élément peut par exemple être un mot ou un groupe de mots, préalablement saisi par l'utilisateur, comme cela sera explicité plus loin. Le module 43 est notamment destiné à simuler des commandes de défilement des informations sur l'écran 2 et à transmettre ces commandes au navigateur 3, par l'intermédiaire du module de filtrage 5.

Dans le cas où les informations à afficher contiennent une succession d'éléments d'information, tel qu'un texte contenant des mots et des éléments de ponctuation, le module 44 est destiné à commander le module 6 de commande d'affichage pour qu'il justifie les éléments successifs d'information à afficher, c'est-à-dire de définir les longueurs respectives des espaces entre les éléments d'information successifs, pour chaque ligne d'affichage de l'écran 2, suivant un algorithme de justification. Cet algorithme est tel que les espaces entre mots successifs sont relativement réguliers.

Le module 45 est destiné à commander le module 6 de commande d'affichage pour qu'il remplace les caractères majuscules en caractères minuscules.

Les paramètres d'affichage constitués par la taille des informations, le mode d'affichage et le centrage des informations sur un élément d'information, peuvent être modifiés par l'utilisateur à l'aide du clavier de saisie 1. En revanche, dans l'exemple particulier de la description, la fonction de justification des éléments d'information successifs et la fonction de remplacement des majuscules en minuscules sont activées d'office, l'utilisateur n'ayant pas la possibilité de les modifier.

Le module de filtrage 5 est destiné à analyser les données saisies à l'aide du clavier 1 afin de reconnaître, parmi ces données, des commandes de paramétrage. En cas de reconnaissance d'une commande de paramétrage, le module 5 intercepte cette commande et active le module de paramétrage correspondant. Dans le cas contraire, les données saisies sont retransmises vers le navigateur 3.

Le module 6 de commande d'affichage est destiné à commander et à gérer l'affichage des informations sur l'écran 2. Le module 6 est notamment agencé pour traiter et modifier des informations dont l'affichage est commandé par le navigateur 3, en fonction de certains paramètres d'affichage, et pour informer le navigateur 3 d'un changement de paramètre d'affichage et ainsi le commander pour qu'il modifie les informations à afficher, comme cela sera explicité plus loin.

Les modules de paramétrage 41-45, le module de filtrage 5 et le module de commande d'affichage 6 sont des modules logiciels, externes au navigateur 3. Grâce à cela, on peut facilement changer de navigateur 3. Le module de filtrage 5 et le module de commande d'affichage 6 sont chacun reliés au navigateur 3 par l'intermédiaire d'une interface de programmation 7, 8. Les modules de paramétrage 41-45 sont en liaison avec le module de filtrage 5 et avec le module 6 de commande de l'affichage.

Le fonctionnement du téléphone va maintenant être décrit.

Dans l'exemple particulier de la description, les informations à afficher comprennent du texte, contenant des mots et des éléments de ponctuation.

En fonctionnement, le navigateur 3 détermine le contenu des informations à afficher et la répartition de ces informations, sur les différentes lignes d'affichage de l'écran 2, en fonction des paramètres d'affichage courants, et commande l'affichage de ces informations au module 6 de commande d'affichage.

Pour modifier la taille des éléments d'informations ou pour sélectionner un mode d'affichage, l'utilisateur appuie sur une combinaison prédéfinie de touches du clavier 1. Le module de filtrage 5 reconnaît que la combinaison de touches activées correspond à une commande de paramétrage et fournit cette commande au module de paramétrage correspondant. Le module de paramétrage informe le module 6 de commande d'affichage du changement de paramètre d'affichage. Le module de commande 6 fournit alors au navigateur 3 l'indication du changement de paramètre d'affichage. Sur réception de cette indication, le navigateur 3 modifie éventuellement le contenu des informations à afficher et détermine la nouvelle répartition de ces informations, à savoir les mots et éléments de ponctuation du texte, sur les différentes lignes d'affichage de l'écran, en fonction du nouveau paramètre d'affichage, et commande un nouvel affichage des informations pour "rafraîchir" l'écran 2.

Ainsi, pour sélectionner le mode plein écran, dans le cas où le mode d'affichage courant est normal, l'utilisateur saisit une commande de sélection de mode d'affichage, en appuyant sur une combinaison prédéfinie de touches du clavier 1. Le module de filtrage 5 reconnaît la commande de sélection du mode d'affichage plein écran et la fournit au module 42 de sélection de mode d'affichage, en activant ainsi le mode plein écran. Le module 42 informe le navigateur 3 du changement de mode d'affichage, par l'intermédiaire du bloc 6 de commande d'affichage. Sur réception de cette information, le navigateur 3 modifie le contenu des informations à afficher, le mode d'affichage plein écran permettant d'afficher davantage d'informations, et détermine la répartition de ces informations sur l'écran 2, en tenant compte du nouveau paramètre, à savoir le mode d'affichage plein écran. On procède de la même manière pour passer du mode d'affichage plein écran au mode d'affichage normal.

Pour diminuer la taille des éléments d'informations affichés, l'utilisateur saisit une commande de diminution de taille, avec le facteur de réduction voulu, en appuyant sur une combinaison prédéfinie de touches du clavier 1. Comme indiqué ci-dessus, le module de filtrage 5 intercepte cette commande, la fournit au module 41, en activant ainsi la fonction de diminution de la taille des informations. Le module 41 transmet alors l'indication de diminution de la taille des informations vers le navigateur 3, par l'intermédiaire du module de commande d'affichage 6. Sur réception de cette indication, le navigateur 3 réduit la taille des informations à afficher, modifie le contenu des informations à afficher (la réduction de taille permettant d'afficher davantage d'informations) et détermine la nouvelle répartition de ces informations sur l'écran 2, en tenant compte de la nouvelle taille des informations. Pour augmenter la taille des informations, on procède de manière analogue.

On soulignera ici qu'en cas de changement de la taille des informations à afficher ou du mode d'affichage, le module 6 de commande de l'affichage commande le navigateur 3 pour qu'il modifie les informations à afficher, en lui fournissant l'indication de changement de paramètre d'affichage.

Pour centrer les informations affichées sur un élément d'information particulier, par exemple un mot, l'utilisateur saisit une commande de recherche, en appuyant sur une combinaison prédéfinie de touches du clavier 1. Le module de filtrage 5 reconnaît la commande et la fournit au module de centrage 43. Sous la commande du module 43, le téléphone invite l'utilisateur à saisir le mot recherché, par affichage d'un message correspondant sur l'écran 2. L'utilisateur saisit le mot recherché. Celui-ci est intercepté par le module de filtrage 5 qui le fourni au module de centrage 43. Le module 43 recherche alors le mot saisi dans les informations dont l'affichage, géré par le module 6 de commande d'affichage, est en cours ou prévu. Dans le cas où ces informations contiennent le mot recherché, le module de centrage 43 transmet au module de filtrage 5 une série d'événements simulant une combinaison d'appuis sur une touche du clavier 1, constituant des commandes de défilement des informations sur l'écran d'affichage 2 de manière à centrer les informations affichées sur le mot recherché. Le module de filtrage 5 retransmet ces commandes de défilement vers le navigateur 3 qui, par l'intermédiaire du bloc 6 de commande d'affichage, commande le défilement des informations sur l'écran 2 jusqu'au centrage de ces informations sur le mot recherché. Dans le cas où les informations dont l'affichage est en cours ou prévu ne contiennent pas le mot recherché, le module de paramétrage 43 en informe l'utilisateur par un message affiché à l'écran 2.

Dans ce cas, c'est le module de filtrage 5 qui commande le navigateur 3 pour qu'il modifie les informations à afficher.

En fonctionnement, le navigateur 3 commande l'affichage des informations au bloc 6 de commande d'affichage. Celui-ci justifie les éléments d'informations à afficher, en modifiant la largeur des espaces entre éléments successifs, et remplace les caractères majuscules en caractères minuscules, en coopération avec les modules de paramétrage 44 et 45. Le remplacement des majuscules en minuscules pouvant nécessiter une nouvelle répartition des informations à afficher, le module 6 de commande d'affichage traite et modifie, le cas échéant, les informations à afficher et les répartit à nouveau sur l'écran 2.

On soulignera que, dans ce cas, c'est le navigateur 3 qui commande le module 6 de commande d'affichage.

Dans l'exemple particulier de la description qui précède, les fonctions de justification du texte et de remplacement des majuscules en minuscules sont activées d'office, l'utilisateur n'ayant pas la possibilité de les modifier. On pourrait bien entendu prévoir que l'utilisateur puisse modifier ces paramètres d'affichage, autrement de supprimer la justification et le remplacement des majuscules en minuscules, à l'aide du clavier de saisie 1.

Bien entendu, l'appareil pourrait ne comprendre certains des modules de paramétrage qui viennent d'être décrits et/ou d'autres modules de paramétrage.

L'invention pourrait également s'appliquer à tout autre appareil de communication, pourvu d'un écran et d'un navigateur informatique.

## Revendications

1. Appareil de communication d'un réseau informatique comprenant un navigateur informatique (3), un écran d'affichage (2) et des moyens de saisie (1), le navigateur (3) étant destiné à commander l'affichage d'informations sur l'écran (2), **caractérisé par le fait qu'**il comprend des moyens de paramétrage (41-45) permettant de définir au moins un paramètre d'affichage du groupe comportant la fonte des caractères, le mode d'affichage, le centrage des informations sur un élément d'information prédéfini, la justification des informations et le remplacement des majuscules en minuscules et des moyens (6) de commande de l'affichage, lesdits moyens étant agencés pour modifier les informations dont l'affichage est commandé par le navigateur (3).

2. Appareil selon la revendication 1 dans lequel les moyens (6) de commande de l'affichage sont agencés pour commander le navigateur (3):

3. Appareil selon la revendication 2 dans lequel le navigateur (3) est agencé pour, en cas de changement du paramètre d'affichage, commander un nouvel affichage des informations.

4. Appareil selon l'une des revendications 2 et 3 dans lequel, les informations à afficher comprenant une pluralité d'éléments d'information, le navigateur (3) est agencé pour déterminer la répartition de ces éléments sur les différentes lignes d'affichage de l'écran (2), en fonction du paramètre d'affichage.

5. Appareil selon l'une des revendications 1 à 4 dans lequel les moyens (6) de commande de l'affichage sont agencés pour être commandés par le navigateur (3).

6. Appareil selon la revendication 5 dans lequel les moyens (6) de commande d'affichage sont agencés pour modifier les informations dont l'affichage est commandé par le navigateur (3).

7. Appareil selon la revendication 6 dans lequel les informations à afficher comprenant une succession d'éléments d'informations, les moyens (6) de commande d'affichage sont agencés pour définir les longueurs respectives des espaces entre les éléments successifs de caractères, pour chaque ligne d'affichage de l'écran (2).

8. Appareil selon l'une des revendications 5 et 6, dans lequel les moyens (6) de commande d'affichage sont agencés pour remplacer les caractères majuscules par des caractères minuscules.

9. Appareil selon l'une des revendications 1 à 8 dans lequel il est prévu des moyens (5) de filtrage destinés à reconnaître, parmi les données saisies, une commande de paramétrage.

10. Appareil selon la revendication 9 dans lequel le module de filtrage (5) commande le navigateur (3) pour qu'il modifie les informations à afficher.

11. Appareil selon la revendication 10, dans lequel les moyens de paramétrage (43) sont destinés à simuler des commandes de défilement des informations sur l'écran d'affichage (2) et à les transmettre au navigateur (3) par l'intermédiaire du module de filtrage (5).

12. Appareil selon l'une des revendications 1 à 11 dans lequel les moyens (6) de commande d'affichage, les moyens de paramétrage (41-45) et les moyens de filtrage (5), sont externes au navigateur (3).
